# EUROPEAN PATENT SPECIFICATION

(11) **EP 3 006 283 B1**
(45) Date of publication and mention of the grant of the patent: **22.07.2020**
(21) Application number: 14188119.3
(22) Date of filing: 08.10.2014
(51) Int. Cl.: B60T 7/12, B60T 13/66, B60W 30/18

(54) **Vehicle brake arrangement**
Fahrzeugbremsenanordnung
Agencement de frein de véhicule

(43) Date of publication of application: 13.04.2016
(73) Proprietor: Scania CV AB, 151 87 Södertälje (SE)
(72) Inventor: Sundén, Fredrik, 126 77 Hägersten (SE)
(74) Representative: Scania CV AB

(56) References cited:
- EP-A2- 1 526 051
- WO-A1-2004/058551
- US-A1- 2007 270 281

## Description

### TECHNICAL FIELD

The present invention relates to a method of controlling a hill hold brake arrangement in a vehicle, a hill hold brake arrangement for a vehicle, and a vehicle comprising a hill hold brake arrangement. The present invention further relates to a computer program for performing a method of controlling a hill hold brake arrangement, and to a computer program product for performing a method of controlling a hill hold brake arrangement in a vehicle.

### BACKGROUND

A hill hold brake system, also referred to simply as a hill hold, is used to assist a driver of a vehicle to prevent the vehicle from rolling backwards during a hill start. For this purpose, during standstill of the vehicle, a hill hold brake is automatically set when a brake actuator is actuated, the hill hold brake remains set also when the brake actuator is released. When a starting command is detected, eventually the brake is automatically released, such that the vehicle is able to start. A condition for releasing the hill hold brake is usually fulfilled when the torque of the drive unit of the vehicle, such as an internal combustion engine, exceeds a starting torque. The starting torque, in this context, is that torque which has to be applied to overcome the driving resistance of the vehicle, e.g. a torque to compensate for inter alia road inclination.

US 2010/262349 discloses a method for assisting a driver during a hill start, the vehicle is held automatically at a standstill using a brake, and when a starting command is detected, the brake is released automatically if the engine torque or an equivalent variable exceeds a specified release threshold value. The vehicle is able to be prevented from rolling back, when the brake is released, by monitoring the engine torque or the equivalent variable for a change which is not due to the actuation of the accelerator, and by modifying the condition for releasing the brake when a change in the engine torque or in the equivalent variable has been detected.

EP 1526051 discloses a vehicle with a hill hold brake. For controlling the hill hold brake, the vehicle is provided with a first sensor for sensing vehicle speed, a second sensor for sensing rpm of the output axle of the vehicle gear box, a third sensor for sensing braking pressure, and a fourth sensor for sensing accelerator pedal position. The sensors are connected to a control unit that is adapted to activate the hill hold brake in response to that the speed is = a predetermined speed, the rpm is = a predetermined rpm, the braking pressure is = a predetermined braking pressure, and the accelerator pedal is inactive. The control unit is adapted to release the hill hold brake in response to activation of the accelerator pedal.

US 2007/270281 A discloses a further hill hold brake arrangement for a vehicle.

### SUMMARY

It is an object of the present invention to simplify activating a hill hold brake arrangement. According to an aspect of the invention, the object is achieved by a method of controlling a hill hold brake arrangement in a vehicle. The method comprises steps of:
monitoring vehicle speed,
sensing accelerator pedal position, and
calculating driving resistance of the vehicle.
Upon fulfilling the criteria of:
the driving resistance causing the vehicle to decelerate,
the vehicle speed reaching a threshold value, and
the accelerator pedal being unactuated, the method performs a step of:
   activating the hill hold brake arrangement.
Since the activating of the hill hold brake arrangement is based on the above-mentioned three criteria, the activating does not require any active measure from the driver of the vehicle, such as actuation of a brake pedal. Accordingly, the hill hold brake arrangement is easier to apply than hill hold brakes currently known to the applicant, which require activation by the driver. As a result, the above mentioned object is achieved.
The aspect of using the driving resistance as a criteria/parameter in activating the hill hold brake arrangement enables the activation of the hill hold brake arrangement without active measures from the driver of the vehicle. Driving resistance is a term for the forces causing a vehicle to slow down, and which accordingly, have to be overcome by a drive unit of the vehicle to maintain the vehicle at a constant speed. The driving resistance comprises road inclination, rolling resistance, aerodynamic resistance, and powertrain resistance of the vehicle, and is influenced by vehicle parameters such as vehicle mass, vehicle type and dimensions. The driving resistance is a parameter commonly use in the control of a heavy goods vehicle, e.g. for gear selection strategy. In modern heavy goods vehicles the driving resistance is continuously calculated during operation of the vehicle. Accordingly, the force or torque required to maintain the vehicle at a standstill is known, as it corresponds to a current driving resistance.

For instance, in a line of vehicles with stop-and-go traffic, the hill hold brake arrangement may facilitate the operation of the vehicle by not requiring any active measures from the driver of the vehicle to prevent the vehicle from rolling backwards, i.e. the driver does not have to alternate between activating brake pedal and accelerator pedal. When it is sensed that the driving resistance causes the vehicle to decelerate, and as soon as the other two criteria are fulfilled, the hill hold brake arrangement may be activated.

The hill hold brake arrangement is used to assist a driver of the vehicle in preventing the vehicle from rolling backwards in certain situations. The vehicle may be a heavy goods vehicle such as a truck or a bus. A drive unit of the vehicle may comprise at least one of an internal combustion engine, an electric motor, a kinetic energy recovery system, etc. The drive unit may be connected via a gearbox transmission to at least one driven wheel axle of the vehicle.

The vehicle may be set in a hill hold active mode, i.e. in which mode when certain criteria are fulfilled, the hill hold brake arrangement is activated. When, on the contrary, the vehicle is set in a hill hold inactive mode, the hill hold brake arrangement is disabled and the driver actively has to prevent the vehicle from rolling backwards at a standstill. In the hill hold active mode the hill hold brake arrangement may be activated not only when criteria according to the method of the present invention, but outside the scope of the present invention, also when other criteria are fulfilled, such as the criteria in the above discussed prior art documents.

According to the invention, the step of activating the hill hold brake arrangement comprises a step of: applying a brake force to at least one wheel of the vehicle sufficient to hold the vehicle at a standstill.

According to the invention, the step of activating the hill hold brake arrangement further comprises a step of: increasing an output torque of a drive unit of the vehicle to a level equal to a current driving resistance, prior to performing the step of:
applying the brake force. In this manner the vehicle may be brought to a more comfortable stop than if only the brake force is applied directly to at least one wheel of the vehicle, since the output torque of the driving unit generally may be transferred more gently to the wheels of the vehicle than a brake force/torque.

According to embodiments, the method may comprise a step of reducing the output torque of the drive unit after the step of applying the brake force. In this manner energy may be saved during standstill of the vehicle.

According to embodiments, the step of increasing the output torque of the drive unit may comprise steps of:
gradually decreasing the deceleration of the vehicle, and
holding the vehicle at a standstill. In this manner the vehicle may be brought to a more comfortable stop prior to applying the brake force to the at least one wheel of the vehicle.

According to embodiments, the method may comprise a step of releasing the hill hold brake arrangement in response to the accelerator pedal being activated to the extent that an output torque of a drive unit of the vehicle exceeds a current driving resistance. In this manner it may be ensured that the vehicle will not roll backwards as soon at the accelerator pedal is activated by the driver of the vehicle.

According to a further aspect of the present invention, the above mentioned object is achieved by a hill hold brake arrangement for a vehicle. The arrangement comprises a vehicle speed sensor, an accelerator pedal position sensor, a wheel brake actuator, a drive unit of the vehicle, and a control system. The vehicle speed sensor, the accelerator pedal position sensor, the wheel brake actuator, and the drive unit are directly or indirectly connected to the control system. The control system is configured to calculate a driving resistance of the vehicle. The control system is configured to activate the wheel brake actuator when the driving resistance causes the vehicle to decelerate, and the vehicle speed reaches a threshold value, and the accelerator pedal is unactuated.

The control system of the hill hold brake arrangement may be configured to perform further steps of aspects and/or embodiments of the method disclosed herein.

According to a further aspect of the present invention, the above mentioned object is achieved by a vehicle comprising a hill hold brake arrangement according to any aspect and/or embodiment disclosed herein.

According to a further aspect of the present invention, the above mentioned object is achieved by a computer program for performing a method of controlling a hill hold brake arrangement in a vehicle, wherein the computer program comprises computer readable code configured to cause a central processing unit of the hill hold brake arrangement to:
monitor vehicle speed,
sense accelerator pedal position, and
calculate driving resistance of the vehicle, and
upon fulfilling the criteria of:
   the driving resistance causing the vehicle to decelerate,
   the vehicle speed reaching a threshold value, and
   the accelerator pedal being unactuated, to:
      activate a wheel brake actuator of the hill hold brake arrangement.

According to the invention, the computer program comprises computer readable code configured to cause a central processing unit of the hill hold brake arrangement to:
increase an output torque of a drive unit of the vehicle to a level equal to a current driving resistance, prior to activating the wheel brake actuator.

The computer program may comprise computer readable code configured to cause the central processing unit to perform further steps of the method according to aspects and/or embodiments disclosed herein.
According to a further aspect of the present invention, the above mentioned object is achieved by a computer program product for performing a method of controlling a hill hold brake arrangement in a vehicle, wherein the computer program product comprises computer readable code configured to cause a central processing unit of the hill hold brake arrangement to:
monitor vehicle speed,
sense accelerator pedal position, and
calculate driving resistance of the vehicle, and
upon fulfilling the criteria of:
   the driving resistance causing the vehicle to decelerate,
   the vehicle speed reaching a threshold value, and
   the accelerator pedal being unactuated, to:
      activate a wheel brake actuator of the hill hold brake arrangement.
The computer program product may comprise computer readable code configured to cause the central processing unit to perform further steps of the method according to aspects and/or embodiments disclosed herein.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a vehicle according to embodiments,
Fig. 2 illustrates a hill hold brake arrangement according to embodiments,
Fig. 3 illustrates a method of controlling a hill hold brake arrangement,
Figs. 4a - 4c illustrate diagrams explaining the steps of the method discussed in connection with Fig. 3, and
Fig. 5 illustrates a computer program product for performing a method of controlling a hill hold brake arrangement.

### DETAILED DESCRIPTION

Aspects of the present invention will now be described more fully. Like numbers refer to like elements throughout. Well-known functions or constructions will not necessarily be described in detail for brevity and/or clarity.

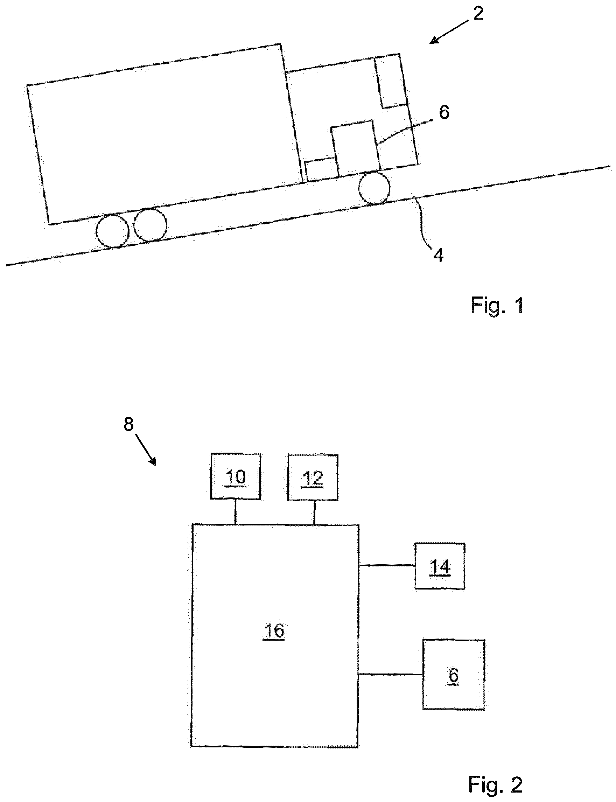

**Fig. 1** illustrates a vehicle 2 according to embodiments. The vehicle 2 illustrated is a heavy goods vehicle in the form of a truck. The vehicle 2 travels on an inclining road surface 4. If the vehicle 2 is brought to a standstill on the road surface 4, the vehicle 2 will start rolling backwards unless a wheel brake is applied or an output torque of a drive unit 6 of the vehicle 2 overcomes the force causing the vehicle 2 to roll backwards. To facilitate the driving of the vehicle 2, it is provided with a hill hold brake arrangement, which is discussed further in the following.

**Fig. 2** illustrates a hill hold brake arrangement 8 according to embodiments. The hill hold brake arrangement 8 may be arranged in a vehicle 2 as disclosed in connection with Fig. 1.

The hill hold brake arrangement 8 comprises a vehicle speed sensor 10, which measures a speed of the vehicle, and an accelerator pedal position sensor 12, which senses a position of an accelerator pedal of the vehicle. In its simplest form the accelerator pedal position sensor 12 may sense if the accelerator pedal is activated or not. The vehicle speed sensor 10 needs not to measure the actual vehicle speed but may instead measure a related parameter such as a rotational speed of a wheel of the vehicle. The hill hold brake arrangement 8 further comprises a wheel brake actuator 14. The wheel brake actuator 14 may for instance comprise a pneumatic or hydraulic cylinder or an electric motor and is configured to actuate a brake of at least one wheel of the vehicle. The wheel brake actuator 14 may be an actuator of an ordinary brake system of the vehicle, or a dedicated actuator for the hill hold brake arrangement 8. The vehicle speed sensor 10, the accelerator pedal position sensor 12, the wheel brake actuator 14, and the drive unit 6 of the vehicle are directly or indirectly connected to a control system 16 of the hill hold brake arrangement 8.

The control system 16 may comprise only one control device, such as an accordingly programmed central processing unit. The control system 16 may form part of a transmission control system of the vehicle. The control system 16 may form part of other control systems of the vehicle, such as a brake control system or an engine control system. Alternatively, the control system 16 may comprise more than one control device and accordingly, the various steps in the operation of the hill hold brake arrangement 8 may be performed by different control devices. For the sake of simplicity, herein reference is only made to one control system 16.

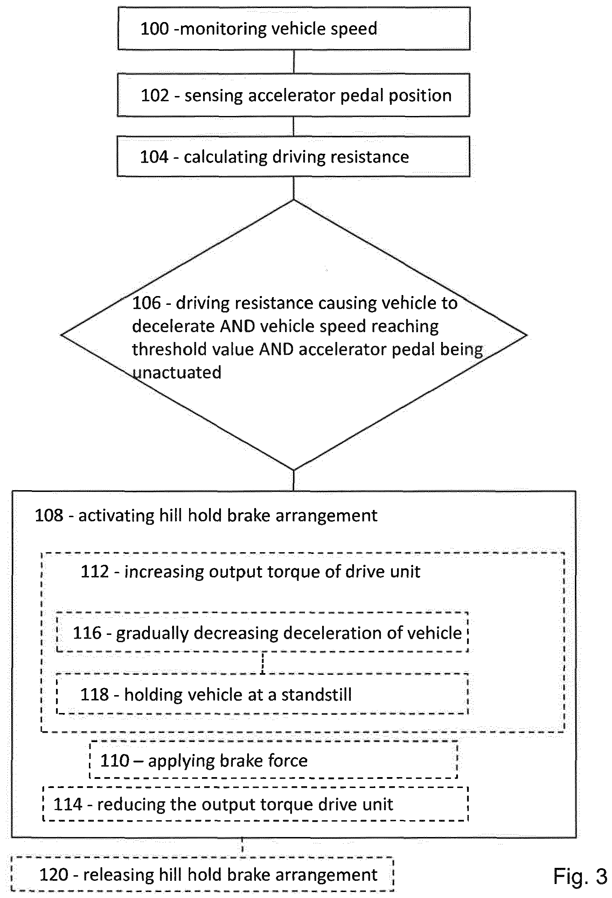

The control system 16 of the hill hold brake arrangement 8 is configured to activate the wheel brake actuator 14 when the driving resistance causes the vehicle to decelerate, and the vehicle speed reaches a threshold value, and the accelerator pedal of the vehicle is unactuated. See further with reference to Fig. 3.

The control system 16 is configured to continuously calculate a driving resistance of the vehicle and to monitor an output from the vehicle speed sensor 10 and the accelerator pedal position sensor 12. In the control system 16 a threshold value for the vehicle speed may be stored. Accordingly, the control system 16 may comprise a memory for storing data, such as the threshold value and monitored vehicle speed data. The control system 16 may monitor and/or calculate an output torque of the drive unit of the vehicle.

The control system 16 may further be configured to increase an output torque of the drive unit 6 of the vehicle to a level equal to a current driving resistance, when the driving resistance causes the vehicle to decelerate, and the vehicle speed reaches the threshold value, and the accelerator pedal is unactuated, prior to activating the wheel brake actuator 14.

Moreover, the control system of the hill hold brake arrangement 8 may be configured to perform the steps of the various embodiments of the method discussed in the following.

**Fig. 3** illustrates a method of controlling a hill hold brake arrangement of the kind discussed above. The method comprises steps of:
monitoring 100 vehicle speed,
sensing 102 accelerator pedal position, and
calculating 104 driving resistance of the vehicle.

Upon fulfilling the criteria 106 of:
the driving resistance causing the vehicle to decelerate,
the vehicle speed reaching a threshold value, and
the accelerator pedal being unactuated, the method performs a step of:
   activating 108 the hill hold brake arrangement.

According to embodiments, the step of activating 108 the hill hold brake arrangement may comprise a step of:
applying 110 a brake force to at least one wheel of the vehicle sufficient to hold the vehicle at a standstill.

According to embodiments, the step of activating 108 the hill hold brake arrangement may further comprise a step of:
increasing 112 an output torque of a drive unit of the vehicle to a level equal to a current driving resistance, prior to performing the step of:
applying 110 the brake force.

According to embodiments, the method may comprise a step of reducing 114 the output torque of the drive unit after the step of applying 110 the brake force.

According to embodiments, the step of increasing 112 the output torque of the drive unit may comprise steps of:
gradually decreasing 116 the deceleration of the vehicle, and
holding 118 the vehicle at a standstill.

According to embodiments, the method may comprise a step of releasing 120 the hill hold brake arrangement in response to the accelerator pedal being activated to the extent that an output torque of a drive unit of the vehicle exceeds a current driving resistance.

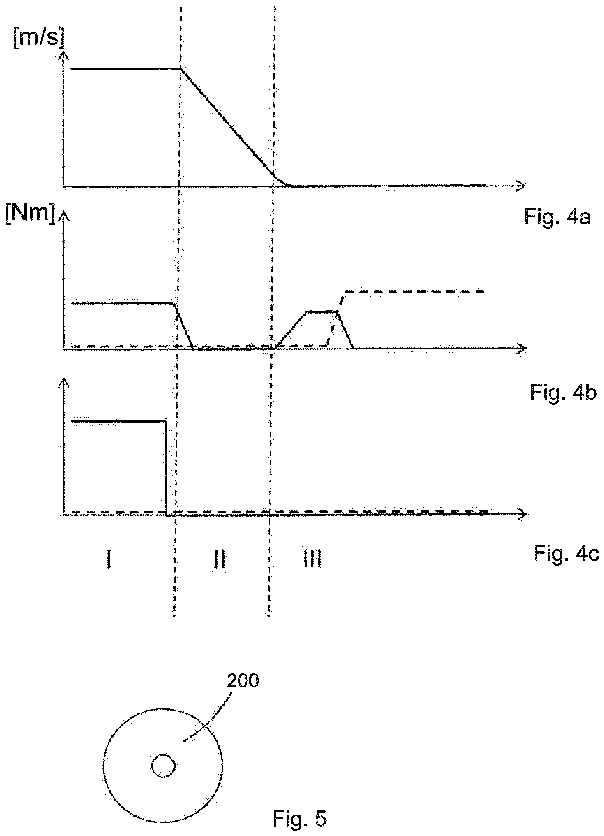

**Figs. 4a** - **4c** illustrate diagrams explaining the steps of the method discussed in connection with Fig. 3, as well as the operation of the hill hold brake arrangement 8 illustrated in Fig. 2 in use in the vehicle 2 illustrated in Fig. 1 as it is driven uphill by a driver, in more detail.

During time period I the driver of the vehicle maintains a constant speed of the vehicle by activating the accelerator pedal of the vehicle. The position of the accelerator pedal is illustrated with the full line in Fig. 4c. The vehicle speed is illustrated in Fig. 4a. At the end of time period I the driver releases the accelerator pedal, see Fig. 4c. During time period II the vehicle decelerates due to the inclination of the road, see Fig. 4a.

During time period III the hill hold brake arrangement is activated to prevent the vehicle from rolling backwards. In Fig. 4b the output torque of the drive unit of the vehicle is shown with a full line and a brake force/torque applied to at least one wheel of the vehicle is shown with a broken line. The time period III starts before the vehicle has come to a complete stop, see Fig. 4a. At the start of time period III the vehicle speed may be e.g. 1 m/s. That is, the vehicle speed threshold value is exemplified at 1 m/s in these embodiments. At the start of time period III the output torque of the drive unit is increased, which causes the deceleration to decrease gradually until the vehicle is brought to a complete stop. The output torque of the driving unit reaches a level equal to a current driving resistance. Accordingly, the output torque holds the vehicle at a standstill. Eventually a brake force/torque sufficient to hold the vehicle at a standstill is applied to at least one wheel of the vehicle. Finally, the output torque of the drive unit is reduced.

During the procedure the brake pedal has not been used, as shown with a broken line in Fig. 4c. Optionally, the brake pedal may be used during portions of the deceleration during time period II in case a quicker stop should be required than the stop caused by the driving resistance alone. However, it is to be noted that according to the present invention it is not the use of the brake pedal as such which activates the hill hold brake arrangement, but the above discussed criteria. That is, the brake pedal may be unactuated by the time the vehicle speed reaches the threshold value.

Other criteria may activate the hill hold brake arrangement when the brake pedal is actuated when the vehicle stops, e.g. as discussed in the above mentioned prior art documents.

According to some embodiments, an increase of the output torque of the drive unit at the start of time period III may be omitted. In such embodiments instead the brake force sufficient to hold the vehicle at a standstill is applied already at the start of time period III. In these embodiments the vehicle may be more difficult to bring to a comfortable stop than in the embodiments disclosed in Figs. 4a - 4c, but the activation of the hill hold brake arrangement is equally effective. In such embodiments the vehicle speed threshold value may be lower than the above exemplified value of 1 m/s, e.g. 0,2 m/s or even 0 m/s.

**Fig. 5** illustrates a computer program product 200 for performing a method of controlling a hill hold brake arrangement in a vehicle. The computer program product 200 is illustrated in the form of CDROM disc but may be any other kind of computer program storage medium. The computer program product 200 comprises computer readable code configured to cause a central processing unit of the hill hold brake arrangement to:
monitor vehicle speed,
sense accelerator pedal position, and
calculate driving resistance of the vehicle, and
upon fulfilling the criteria of:
   the driving resistance causing the vehicle to decelerate,
   the vehicle speed reaching a threshold value, and
   the accelerator pedal being unactuated, to:
      activate a wheel brake actuator of the hill hold brake arrangement.

According to embodiments, the computer program product 200 may comprise computer readable code configured to cause a central processing unit of the hill hold brake arrangement to:
increase an output torque of a drive unit of the vehicle to a level equal to a current driving resistance, prior to activating the wheel brake actuator.

It is understood by those skilled in the art that the hill hold brake arrangement of the vehicle may also be activated when other conditions are fulfilled or by an active measure of the driver of the vehicle, outside the scope of the present invention.

This invention should not be construed as limited to the embodiments set forth herein. A person skilled in the art will realize that different features of the embodiments disclosed herein may be combined to create embodiments other than those described herein, without departing from the scope of the present invention, as defined by the appended claims. For instance may the vehicle be a different kind of heavy goods vehicle, such as a bus. The vehicle may have one, two, or more drive wheel axles. Although the invention has been described with reference to example embodiments, many different alterations, modifications and the like will become apparent for those skilled in the art. Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A method of controlling a hill hold brake arrangement (8) in a vehicle, comprising steps of:
monitoring (100) vehicle speed,
sensing (102) accelerator pedal position, the method being **characterised in that** it further comprises the step of calculating (104) driving resistance of the vehicle,
and **in that** upon fulfilling the criteria (106) of:
the driving resistance causing the vehicle to decelerate,
the vehicle speed reaching a threshold value, and
the accelerator pedal being unactuated, a step of activating (108) the hill hold brake arrangement (8) is performed, wherein the step of activating (108) the hill hold brake arrangement (8) comprises a step of:
applying (110) a brake force to at least one wheel of the vehicle sufficient to hold the vehicle at a standstill, and
wherein the step of activating (108) the hill hold brake arrangement (8) further comprises a step of:
increasing (112) an output torque of a drive unit (6) of the vehicle to a level equal to a current driving resistance, prior to performing the step of applying (110) the brake force.

2. The method according to claim 1, comprising a step of reducing (114) the output torque of the drive unit (6) after the step of applying the brake force.

3. The method according to claim 2, wherein the step of increasing (112) the output torque of the drive unit (6) comprises steps of:
gradually decreasing (116) the deceleration of the vehicle, and
holding (118) the vehicle at a standstill.

4. The method according to any of the preceding claims, comprising a step of releasing (120) the hill hold brake arrangement (8) in response to the accelerator pedal being activated to the extent that an output torque of a drive unit (6) of the vehicle exceeds a current driving resistance.

5. A hill hold brake arrangement (8) for a vehicle (2), the arrangement (8) comprising a vehicle speed sensor (10), an accelerator pedal position sensor (12), a wheel brake actuator (14), a drive unit (6) of the vehicle (2), and a control system (16), wherein
the vehicle speed sensor (10), the accelerator pedal position sensor (12), the wheel brake actuator (14), and the drive unit (6) are directly or indirectly connected to the control system (16), **characterised in that** the control system (16) is configured to calculate a driving resistance of the vehicle (2),
and **in that** the control system (16) is configured to activate the wheel brake actuator (14) when the driving resistance causes the vehicle (2) to decelerate, and the vehicle speed reaches a threshold value, and the accelerator pedal is unactuated, wherein the control system (16) is configured to increase an output torque of the drive unit (6) of the vehicle (2) to a level equal to a current driving resistance, when the driving resistance causes the vehicle (2) to decelerate, and the vehicle speed reaches a threshold value, and the accelerator pedal is unactuated, prior to activating the wheel brake actuator (14).

6. A vehicle (2) comprising a hill hold brake arrangement (8) according to claim 5.

7. A computer program for performing a method of controlling a hill hold brake arrangement (8) in a vehicle, wherein the computer program comprises computer readable code configured to cause a central processing unit of the hill hold brake arrangement (8) to:
monitor vehicle speed,
sense accelerator pedal position, and
calculate driving resistance of the vehicle, and
upon fulfilling the criteria of:
the driving resistance causing the vehicle to decelerate,
the vehicle speed reaching a threshold value, and
the accelerator pedal being unactuated, to:
activate a wheel brake actuator of the hill hold brake arrangement (8), wherein the computer program comprises computer readable code configured to cause a central processing unit of the hill hold brake arrangement (8) to:
increase an output torque of a drive unit (6) of the vehicle to a level equal to a current driving resistance, prior to activating the wheel brake actuator.

8. A computer program product (200) for performing a method of controlling a hill hold brake arrangement (8) in a vehicle, wherein the computer program product (200) comprises computer readable code configured to cause a central processing unit of the hill hold brake arrangement (8) to:
monitor vehicle speed,
sense accelerator pedal position, and
calculate driving resistance of the vehicle, and
upon fulfilling the criteria of:
the driving resistance causing the vehicle to decelerate,
the vehicle speed reaching a threshold value, and
the accelerator pedal being unactuated, to:
activate a wheel brake actuator of the hill hold brake arrangement (8), wherein the computer program product (200) comprises computer readable code configured to cause a central processing unit of the hill hold brake arrangement (8) to:
increase an output torque of a drive unit (6) of the vehicle to a level equal to a current driving resistance, prior to activating the wheel brake actuator.

## Patentansprüche

1. Verfahren zum Steuern einer Rückrollverhinderungsbremsanordnung (8) in einem Fahrzeug, umfassend die Schritte:
Überwachen (100) der Fahrzeuggeschwindigkeit,
Erfassen (102) der Gaspedalstellung, wobei das Verfahren **dadurch gekennzeichnet ist, dass** es ferner umfasst den Schritt des
Berechnens (104) des Fahrwiderstands des Fahrzeugs, und dass, bei Erfüllen der Kriterien (106) dass:
der Fahrwiderstand bewirkt, dass das Fahrzeug langsamer wird,
die Fahrzeuggeschwindigkeit einen Schwellenwert erreicht, und
das Gaspedal unbetätigt ist, ein Schritt des
Aktivierens (108) der Rückrollverhinderungsbremsanordnung (8) ausgeführt wird, wobei der Schritt des Aktivierens (108) der Rückrollverhinderungsbremsanordnung (8) umfasst einen Schritt des:
Anlegens (110) einer Bremskraft an wenigstens ein Rad des Fahrzeugs, die dazu ausreicht, das Fahrzeug in einem Stillstand zu halten, und
wobei der Schritt des Aktivierens (108) der Rückrollverhinderungsbremsanordnung (8) ferner umfasst einen Schritt des:
Erhöhens (112), vor Ausführen des Schritts des Anlegens (110) der Bremskraft, eines Ausgangsmoments einer Antriebseinheit (6) des Fahrzeugs auf ein einem aktuellen Fahrwiderstand entsprechendes Niveau.

2. Verfahren nach Anspruch 1, umfassend einen Schritt des Verringerns (114) des Ausgangsmoments der Antriebseinheit (6) nach dem Schritt des Anlegens der Bremskraft.

3. Verfahren nach Anspruch 2, bei dem der Schritt des Erhöhens (112) des Ausgangsmoments der Antriebseinheit (6) die Schritte umfasst:
allmähliches Verringern (116) des langsamer Werdens des Fahrzeugs, und
Halten (118) des Fahrzeugs in einem Stillstand.

4. Verfahren nach einem der vorhergehenden Ansprüche, umfassend einen Schritt des Lösens (120) der Rückrollverhinderungsbremsanordnung (8) in Reaktion darauf, dass das Gaspedal soweit betätigt wird, dass ein Ausgangsmoment einer Antriebseinheit (6) des Fahrzeugs einen aktuellen Fahrwiderstand übersteigt.

5. Rückrollverhinderungsbremsanordnung (8) für ein Fahrzeug (2), wobei die Anordnung (8) einen Fahrzeuggeschwindigkeitssensor (10), einen Gaspedalstellungssensor (12), einen Radbremsaktuator (14), eine Antriebseinheit (6) des Fahrzeugs (2) und ein Steuersystem (16) aufweist, wobei
der Fahrzeuggeschwindigkeitssensor (10), der Gaspedalstellungssensor (12), der Radbremsaktuator (14) und die Antriebseinheit (6) unmittelbar oder mittelbar mit dem Steuersystem (16) verbunden sind, **dadurch gekennzeichnet, dass**
das Steuersystem (16) dazu eingerichtet ist, einen Fahrwiderstand des Fahrzeugs (2) zu berechnen, und dass das Steuersystem (16) dazu eingerichtet ist, den Radbremsaktuator (14) zu aktivieren, wenn der Fahrwiderstand bewirkt, dass das Fahrzeug (2) langsamer wird und die Fahrzeuggeschwindigkeit einen Schwellenwert erreicht und das Gaspedal unbetätigt ist, wobei das Steuersystem (16) dazu eingerichtet ist, vor Aktivieren des Radbremsaktuators (14) ein Ausgangsmoment der Antriebseinheit (6) des Fahrzeugs (2) auf ein einem aktuellen Fahrwiderstand entsprechendes Niveau zu erhöhen, wenn der Fahrwiderstand bewirkt, dass das Fahrzeug (2) langsamer wird und die Fahrzeuggeschwindigkeit einen Schwellenwert erreicht und das Gaspedal unbetätigt ist.

6. Fahrzeug (2) mit einer Rückrollverhinderungsbremsanordnung (8) nach Anspruch 5.

7. Computerprogramm zum Durchführen eines Verfahrens zum Steuern einer Rückrollverhinderungsbremsanordnung (8) in einem Fahrzeug, wobei das Computerprogramm computerlesbaren Code umfasst, der dazu konfiguriert ist, eine zentrale Verarbeitungseinheit der Rückrollverhinderungsbremsanordnung (8) dazu zu veranlassen:
die Fahrzeuggeschwindigkeit zu überwachen,
die Gaspedalstellung zu erfassen, und
den Fahrwiderstand des Fahrzeugs zu berechnen, und
bei Erfüllen der Kriterien dass:
der Fahrwiderstand bewirkt, dass das Fahrzeug langsamer wird,
die Fahrzeuggeschwindigkeit einen Schwellenwert erreicht, und
das Gaspedal unbetätigt ist,
einen Radbremsaktuator der Rückrollverhinderungsbremsanordnung (8) zu aktivieren, wobei das Computerprogramm computerlesbaren Code umfasst, der dazu konfiguriert ist, eine zentrale Verarbeitungseinheit der Rückrollverhinderungsbremsanordnung (8) dazu zu veranlassen:
vor Aktivieren des Radbremsaktuators ein Ausgangsmoment einer Antriebseinheit (6) des Fahrzeugs auf ein einem aktuellen Fahrwiderstand entsprechendes Niveau zu erhöhen.

8. Computerprogrammprodukt (200) zum Durchführen eines Verfahrens zum Steuern einer Rückrollverhinderungsbremsanordnung (8) in einem Fahrzeug, wobei das Computerprogrammprodukt (200) computerlesbaren Code umfasst, der dazu konfiguriert ist, eine zentrale Verarbeitungseinheit der Rückrollverhinderungsbremsanordnung (8) dazu zu veranlassen:
die Fahrzeuggeschwindigkeit zu überwachen,
die Gaspedalstellung zu erfassen, und
den Fahrwiderstand des Fahrzeugs zu berechnen, und
bei Erfüllen der Kriterien dass:
der Fahrwiderstand bewirkt, dass das Fahrzeug langsamer wird,
die Fahrzeuggeschwindigkeit einen Schwellenwert erreicht, und
das Gaspedal unbetätigt ist,
einen Radbremsaktuator der Rückrollverhinderungsbremsanordnung (8) zu aktivieren, wobei das Computerprogrammprodukt (200) computerlesbaren Code umfasst, der dazu eingerichtet ist, eine zentrale Verarbeitungseinheit der Rückrollverhinderungsbremsanordnung (8) dazu zu veranlassen:
vor Aktivieren des Radbremsaktuators ein Ausgangsmoment einer Antriebseinheit (6) des Fahrzeugs auf ein einem aktuellen Fahrwiderstand entsprechendes Niveau zu erhöhen.

## Revendications

1. Procédé de commande d'un agencement de frein d'aide au démarrage en côte (8) dans un véhicule, comprenant des étapes de :
la surveillance (100) d'une vitesse de véhicule,
la détection (102) de la position de pédale d'accélérateur, le procédé étant **caractérisé en ce qu'**il comprend en outre l'étape de calcul (104) de résistance de conduite du véhicule, et
**en ce que** en remplissant les critères (106) de :
la résistance à la conduite amenant le véhicule à décélérer,
la vitesse du véhicule atteignant une valeur seuil, et
la pédale d'accélérateur n'étant pas actionnée, une étape d'activation (108) de l'agencement de frein d'aide au démarrage en côte (8) est effectuée, dans laquelle l'étape d'activation (108) de l'agencement de frein d'aide au démarrage en côte (8) comprenant une étape de:
l'application (110) d'une force de freinage à au moins une roue du véhicule suffisante pour maintenir le véhicule à une position fixe, et
dans lequel l'étape d'activation (108) du frein d'aide au démarrage en côte (8) comprend en outre une étape de :
l'augmentation (112) d'un couple de sortie d'une unité motrice (6) du véhicule à un niveau égal à une résistance de conduite actuelle, avant la réalisation de l'étape d'application (110) de la force de freinage.

2. Procédé selon la revendication 1, comprenant une étape de réduction (114) du couple de sortie de l'unité motrice (6) après l'étape d'application de la force de freinage.

3. Procédé selon la revendication 2, dans lequel l'étape d'augmentation (112) du couple de sortie de l'unité motrice (6) comprend des étapes de :
la diminution progressive (116) de la décélération du véhicule, et
le maintien (118) du véhicule à une position fixe.

4. Procédé selon l'une quelconque des revendications précédentes, comprenant une étape de libération (120) de l'agencement de frein d'aide au démarrage en côte (8) en réponse à l'activation de la pédale d'accélérateur dans la mesure où un couple de sortie d'une unité motrice (6) du véhicule dépasse une résistance de conduite actuelle.

5. Agencement de frein d'aide au démarrage en côte (8) pour un véhicule (2), l'agencement (8) comprenant un capteur de vitesse du véhicule (10), un capteur de position de pédale d'accélérateur (12), un actionneur de frein de roue (14), une unité motrice (6) du véhicule (2) et un système de commande (16), dans lequel
le capteur de vitesse du véhicule (10), le capteur de position de pédale d'accélérateur (12), l'actionneur de frein de roue (14) et l'unité motrice (6) sont directement ou indirectement connectés au système de commande (16), **caractérisé en ce que**
le système de commande (16) est configuré pour calculer une résistance de conduite du véhicule (2),
et **en ce que** le système de commande (16) est configuré pour activer l'actionneur de frein de roue (14) lorsque la résistance de conduite amène le véhicule (2) à décélérer, et que la vitesse du véhicule atteint une valeur seuil, et que la pédale d'accélérateur n'est pas actionnée, dans lequel le système de commande (16) est configuré pour augmenter un couple de sortie de l'unité motrice (6) du véhicule (2) à un niveau égal à une résistance de conduite actuelle, lorsque la résistance de conduite amène le véhicule (2) à décélérer, et la vitesse du véhicule atteint une valeur seuil, et la pédale d'accélérateur n'est pas actionnée, avant l'activation de l'actionneur de frein de roue (14).

6. Véhicule (2) comprenant un agencement de frein d'aide au démarrage en côte (8) selon la revendication 5.

7. Programme informatique pour l'exécution d'un agencement de frein d'aide au démarrage en côte (8) dans un véhicule, dans lequel le programme informatique comprend un code lisible par ordinateur configuré pour amener une unité de traitement centrale de l'agencement de frein d'aide au démarrage en côte (8) à :
surveiller une vitesse de véhicule,
capter une position de pédale d'accélérateur, et
calculer la résistance à la conduite du véhicule, et
en remplissant les critères de :
la résistance à la conduite amenant le véhicule à décélérer,
la vitesse du véhicule atteignant une valeur seuil, et
la pédale d'accélérateur n'étant pas actionnée, pour :
activer un actionneur de frein de roue de l'agencement de frein d'aide au démarrage en côte (8), dans lequel le programme informatique comprend un code lisible par ordinateur configuré pour amener une unité de traitement centrale de l'agencement de frein d'aide au démarrage en côte (8) à :
augmenter un couple de sortie d'une unité motrice (6) du véhicule à un niveau égal à une résistance de conduite actuelle, avant l'activation de l'actionneur de frein de roue.

8. Produit de programme informatique (200) pour l'exécution d'un procédé de contrôle d'un agencement de frein d'aide au démarrage en côte (8) dans un véhicule, dans lequel le produit de programme informatique (200) comprend un code lisible par ordinateur configuré pour amener une unité de traitement centrale de l'agencement de frein d'aide au démarrage en côte (8) à :
surveiller une vitesse de véhicule,
capter une position de pédale d'accélérateur, et
calculer la résistance à la conduite du véhicule, et
en remplissant les critères de :
la résistance à la conduite amenant le véhicule à décélérer,
la vitesse du véhicule atteignant une valeur seuil, et
la pédale d'accélérateur n'étant pas actionnée, pour :
activer un actionneur de frein de roue de l'agencement de frein d'aide au démarrage en côte (8), dans lequel le produit de programme informatique (200) comprend un code lisible par ordinateur configuré pour amener une unité de traitement centrale de l'agencement de frein d'aide au démarrage en côte (8) à :
augmenter un couple de sortie d'une unité motrice (6) du véhicule à un niveau égal à une résistance de conduite actuelle, avant l'activation de l'actionneur de frein de roue.
